# EUROPEAN PATENT SPECIFICATION

(11) **EP 3 012 489 B1**
(45) Date of publication and mention of the grant of the patent: **06.05.2020**
(21) Application number: 15188068.9
(22) Date of filing: 02.10.2015
(51) Int. Cl.: F16H 61/00, F16H 57/04, F01M 1/02

(54) **HYDRAULIC SYSTEM FOR A VEHICLE**
HYDRAULIKSYSTEM FÜR EIN FAHRZEUG
SYSTÈME HYDRAULIQUE POUR UN VÉHICULE

(30) Priority: 22.10.2014 US 201414520420
(43) Date of publication of application: 27.04.2016
(73) Proprietor: Deere & Company, Moline, IL 61265 (US)
(72) Inventor: Nystrom, Dwayne A, Waterloo, IA Iowa 50701 (US); Holland, Michael A, Conrad, IA Iowa 50621 (US); Knight, Jesse R, Waterloo, IA Iowa 50701 (US)
(74) Representative: Dehnhardt, Florian Christopher

(56) References cited:
- GB-A- 2 014 257
- US-A- 5 020 324
- US-A1- 2008 238 187
- US-A1- 2009 158 727
- US-A1- 2013 000 293

## Description

The present invention relates to a hydraulic system for a vehicle.

A known production tractor uses three gear pumps in an open center hydraulic system with dedicated pumps for drivetrain lubrication, tractor implement hydraulics, and tractor steering and transmission control hydraulics. Other known production tractors have hydraulic systems which include dedicated fixed displacement pumps for providing transmission lubrication and charge oil. A John Deere production tractor uses a priority valve to meter oil to the charge and lubrication circuit, but the excess oil must be returned to the sump or pump inlet. On other John Deere production tractors, a variable displacement charge pump provides oil to the inlet of the transmission pumps where the transmission pumps act as flow dividers to split oil to various pressure levels in the transmission lubrication circuit. These latter tractors have hydraulic systems which passively route a small volume of hydraulic oil to minor lubrication consumers, but these consumers do not control the displacement of the variable displacement charge pump. Another John Deere production tractor has a hydraulic system in which a charge pump fills a clean oil reservoir from which the transmission pump suctions hydraulic oil from an inlet to the reservoir. These hydraulic systems require additional pump drives to move the hydraulic oil to their desired locations which cost the tractor energy due to additional mechanical efficiency losses. Fixed displacement pumps produce excess flow at high engine speeds which must be either pumped through the circuit regardless of demand or bypassed back to tank. Tractor power is wasted when this extra volume of hydraulic oil is moved without gaining any useful work from it.

US 2009/0158 727 A1 show with a main hydraulic circuit. It has a variable displacement charge pump which feeds into a variable displacement main hydraulic pump

Thus, it is desired to provide a hydraulic system which is able to supply the required charge and lubrication flow with a single variable displacement pump.

This and other objects are achieved by the present invention, wherein a hydraulic system for a vehicle is provided. The hydraulic system comprises a transmission lube circuit, a main pump, and a variable displacement charge pump for supplying charge fluid to the main pump. The variable displacement charge pump has a charge pump outlet and a pressure responsive displacement control unit. A charge fluid line communicates the charge pump outlet with an inlet of the main pump. A pressure sensing line communicates the charge fluid line with the displacement control unit. A lube line communicates the charge pump outlet with the transmission lube circuit. A fluid restriction is formed in the lube line.

The result is a pressure and flow compensated hydraulic system for a vehicle, such as a tractor. The variable displacement charge pump supplies charge fluid (e.g., hydraulic oil) to a main pump and supplies lube fluid (e.g., hydraulic oil) to a transmission lube circuit. The proportion of lube fluid flow supplied by the variable displacement charge pump to the transmission lubrication circuit is controlled passively by the fluid restriction. The variable displacement charge pump may supply charge fluid to three places, including a high pressure variable displacement piston pump for tractor hydraulics, to a fixed displacement transmission pump for transmission control pressure, and to a transmission lube circuit.

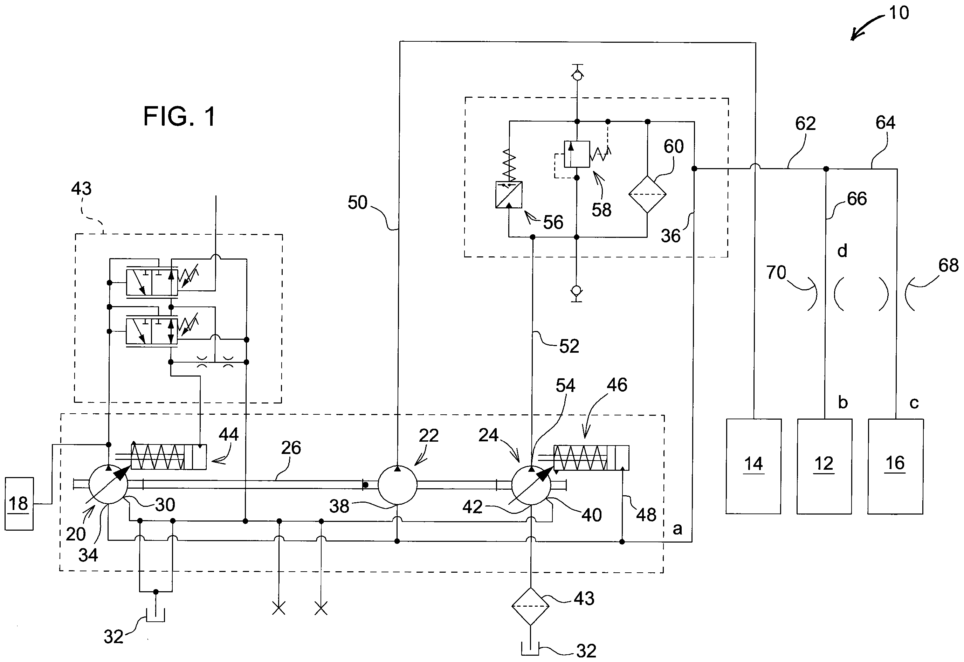

The sole Figure is a schematic circuit diagram of a hydraulic system embodying the invention.

Referring to the Figure, a hydraulic system 10 for a vehicle (not shown), such as a tractor for agricultural purposes is provided. The hydraulic system 10 provides pressurized hydraulic oil to a conventional transmission lube circuit 12, to a conventional transmission control circuit 14, to a conventional brake valve 16 and to a conventional implement circuit 18. The hydraulic system 10 also includes a main pump 20 formed by a variable displacement piston pump, a transmission pump 22 formed by a fixed displacement pump, and a variable displacement charge pump 24. Pumps 20, 22 and 24 may be driven by a common drive shaft 26, which may be driven by an engine (not shown) of the vehicle.

Main pump 20 has a case drain 30 connected to a reservoir 32 and an inlet 34 connected to a charge fluid line 36. Transmission pump 22 has an inlet 38 connected to the charge fluid line 36. Variable displacement charge pump 24 has a charge pump outlet 54, a case drain 40 connected to the reservoir 32 and an inlet 42 connected to the reservoir 32 via an inlet screen 43. Main pump 20 has a conventional pressure and flow responsive displacement control unit 44. A conventional pump control circuit 43 controls the pressure in the displacement control unit 44. Variable displacement charge pump 24 has a pressure responsive displacement control unit 46. Pressure sensing line 48 communicates pressure responsive displacement control unit 46 with charge fluid line 36.

Line 50 connects an outlet of fixed displacement transmission pump 22 to transmission control circuit 14. Outlet line 52 is connected to the charge pump outlet 54 of variable displacement charge pump 24. A pressure sensor 56, a filter bypass valve 58 and a hydraulic oil filter 60 are connected in parallel between outlet line 52 and charge fluid line 36. A branch line 62 is connected to charge fluid line 36. A brake valve reservoir supply line 64 connects branch line 62 to the brake valve 16. A lube line 66 connects branch line 62 to the transmission lube circuit 12. A fluid restriction, such as orifice 68 (passive resistance) or an active resistance (e.g., a valve) is placed in brake valve reservoir supply line 64. A fluid restriction, such as orifice 70 (passive resistance) or an active resistance (e.g., a valve) is placed in lube line 66.

The result is a pressure and flow compensated hydraulic system 10 in which a single variable displacement charge pump 24 provides both charge flow to charge fluid line 36 and low pressure lubrication flow to transmission lube circuit 12, without a dedicated fixed displacement transmission lube pump.

This hydraulic system 10 manages the flow of charge oil to the main pump 20 and the flow of lubrication oil to the transmission lube circuit 12 using the variable displacement charge pump 24. Oil flow to the transmission lubrication circuit 12 can be controlled passively by means of the lubrication network resistances or actively via the fluid restriction or orifice 70. The orifice 70 limits the amount of lube oil that enters into the transmission lubrication circuit 12 and maintains a required minimum pressure at the inlet 34 of the main pump 20. The variable displacement charge pump 24 changes displacements for transmission lubrication based on the pressure signal from charge fluid line 36 which is influenced by the lubrication orifices (not shown) in the transmission lube circuit 12 or by a change in charge oil demand from the variable displacement charge pump 20. When transmission lubrication and charge oil demand is low, the variable displacement charge pump 24 can decrease pump displacement saving the energy that the other circuits use to move the excess oil produced by the fixed displacement pumps.

## Claims

1. A hydraulic system for a vehicle comprising a transmission lube circuit (12); a main pump (20); a variable displacement charge pump (24) for supplying charge fluid to the main pump (20), the variable displacement charge pump (24) having a charge pump outlet (54) and a pressure responsive displacement control unit (46); a charge fluid line (36) communicating the charge pump outlet (54) with an inlet (34) of the main pump (20); a pressure sensing line (48) communicating the charge fluid line (36) with the displacement control unit (46); a lube line (66) communicating the charge pump outlet (54) with the transmission lube circuit (12); and a fluid restriction (70) in the lube line (66).

2. The hydraulic system according to claim 1, **characterized in that** the main pump (20) is a variable displacement piston pump.

3. The hydraulic system according to claim 1 or 2, **characterized by** further comprising a transmission pump (22) having an inlet (38) connected to the charge fluid line (36) and having an outlet connected to a transmission control circuit (14).

4. The hydraulic system according to claim 3, **characterized in that** the transmission pump is a fixed displacement pump.

5. The hydraulic system according to at least one of claims 1 to 4, **characterized by** further comprising a hydraulic oil filter (60) connected between the charge pump outlet (54) of the charge pump (24) and the charge fluid line (36), and a filter bypass valve (58) connected between the charge pump outlet (54) of the charge pump (24) and the charge fluid line (36).

6. The hydraulic system according to at least one of claims 1 to 5, **characterized by** further comprising a brake valve reservoir supply line (64) connected between the charge fluid line (36) and a brake valve (16), and a further fluid restriction (68) in the brake valve reservoir supply line (64).

## Patentansprüche

1. Hydrauliksystem für ein Fahrzeug, welches umfasst: einen Getriebeschmierkreis (12); eine Hauptpumpe (20); eine verstellbare Ladepumpe (24) zum Fördern von Ladefluid zur Hauptpumpe (20), wobei die verstellbare Ladepumpe (24) einen Ladepumpenauslass (54) und eine druckabhängige Verstellsteuereinheit (46) aufweist; eine Ladefluidleitung (36), die den Ladepumpenauslass (54) mit einem Einlass (34) der Hauptpumpe (20) verbindet; eine Druckmessleitung (48), die die Ladefluidleitung (36) mit der Verstellsteuereinheit (46) verbindet; eine Schmierölleitung (66), die den Ladepumpenauslass (54) mit dem Getriebeschmierkreis (12) verbindet; und eine Fluiddrossel (70) in der Schmierölleitung (66) .

2. Hydrauliksystem nach Anspruch 1, **dadurch gekennzeichnet, dass** die Hauptpumpe (20) eine Kolbenverstellpumpe ist.

3. Hydrauliksystem nach Anspruch 1 oder 2, **dadurch gekennzeichnet, dass** es ferner eine Getriebepumpe (22) umfasst, die einen Einlass (38) aufweist, der mit der Ladefluidleitung (36) verbunden ist, und einen Auslass aufweist, der mit einem Getriebesteuerkreis (14) verbunden ist.

4. Hydrauliksystem nach Anspruch 3, **dadurch gekennzeichnet, dass** die Getriebepumpe eine Konstantpumpe ist.

5. Hydrauliksystem nach wenigstens einem der Ansprüche 1 bis 4, **dadurch gekennzeichnet, dass** es ferner ein Hydraulikölfilter (60), das zwischen dem Ladepumpenauslass (54) der Ladepumpe (24) und der Ladefluidleitung (36) angeordnet ist, und ein Filterumgehungsventil (58), das zwischen dem Ladepumpenauslass (54) der Ladepumpe (24) und der Ladefluidleitung (36) angeordnet ist, umfasst.

6. Hydrauliksystem nach wenigstens einem der Ansprüche 1 bis 5, **dadurch gekennzeichnet, dass** es ferner eine Bremsventilbehälter-Zuleitung (64), die zwischen der Ladefluidleitung (36) und einem Bremsventil (16) angeordnet ist, und eine weitere Fluiddrossel (68) in der Bremsventilbehälter-Zuleitung (64) umfasst.

## Revendications

1. Système hydraulique pour un véhicule comprenant un circuit de lubrification de transmission (12) ; une pompe principale (20) ; une pompe de charge à cylindrée variable (24) pour fournir un fluide de charge à la pompe principale (20), la pompe de charge à cylindrée variable (24) ayant une sortie de pompe de charge (54) et une unité de commande de cylindrée sensible à la pression (46) ; une conduite de fluide de charge (36) mettant en communication la sortie de pompe de charge (54) avec une entrée (34) de la pompe principale (20) ; une conduite sensible à la pression (48) mettant en communication la conduite de fluide de charge (36) avec l'unité de commande de cylindrée (46) ; une conduite de lubrification (66) mettant en communication la sortie de pompe de charge (54) avec le circuit de lubrification de transmission (12) ; et une restriction de fluide (70) dans la conduite de lubrification (66).

2. Système hydraulique selon la revendication 1, **caractérisé en ce que** la pompe principale (20) est une pompe à piston à cylindrée variable.

3. Système hydraulique selon la revendication 1 ou 2, **caractérisé en ce qu'**il comprend en outre une pompe de transmission (22) ayant une entrée (38) raccordée à la conduite de fluide de charge (36) et ayant une sortie raccordée à un circuit de commande de transmission (14).

4. Système hydraulique selon la revendication 3, **caractérisé en ce que** la pompe de transmission est une pompe à cylindrée fixe.

5. Système hydraulique selon au moins l'une des revendications 1 à 4, **caractérisé en ce qu'**il comprend en outre un filtre à huile hydraulique (60) raccordé entre la sortie de pompe de charge (54) de la pompe de charge (24) et la conduite de fluide de charge (36), et une soupape de dérivation de filtre (58) raccordée entre la sortie de pompe de charge (54) de la pompe de charge (24) et la conduite de fluide de charge (36).

6. Système hydraulique selon au moins l'une des revendications 1 à 5, **caractérisé en ce qu'**il comprend en outre une conduite d'alimentation de réservoir de soupape de frein (64) raccordée entre la conduite de fluide de charge (36) et une soupape de frein (16), et une restriction de fluide supplémentaire (68) dans la conduite d'alimentation de réservoir de soupape de frein (64) .
